(19)

Europäisches
Patentamt
European
Patent Office
Office européen
des brevets

(11) **EP 2 431 804 A1**

(12) **EUROPEAN PATENT APPLICATION**
published in accordance with Art. 153(4) EPC

(43) Date of publication:
**21.03.2012 Bulletin 2012/12**

(21) Application number: **10769530.6**

(22) Date of filing: **30.04.2010**

(51) Int Cl.:
*G02F 1/167* (2006.01)    *G02F 1/17* (2006.01)

(86) International application number:
**PCT/JP2010/003099**

(87) International publication number:
**WO 2010/125830 (04.11.2010 Gazette 2010/44)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.04.2009 JP 2009111334**

(71) Applicant: **Bridgestone Corporation
Tokyo 104-8340 (JP)**

(72) Inventors:
• **ANZAI, Hiroyuki
Kodaira-shi
Tokyo 187-8531 (JP)**

• **KAGA, Norihiko
Kodaira-shi
Tokyo 187-8531 (JP)**
• **YAKUSHIJI, Gaku
Kodaira-shi
Tokyo 187-8531 (JP)**

(74) Representative: **Lamb, Martin John Carstairs et al
Marks & Clerk LLP
90 Long Acre
London
WC2E 9RA (GB)**

(54) **PARTICLE FOR DISPLAY MEDIUM**

(57)    Particles for display media having charging properties used for information display panel, is **characterized in that**, in the particles for display media in which an external additive is applied on a surface of a mother particle made of resin, the external additive made of an external additive of an weak hydrophobic property and an external additive made of a metal oxide is used. Herewith, the particles for display media which can drive under a low voltage driving, and thus reduce a cost of the information display panel using such particles for display media are provided.

## FIG. 4

EP 2 431 804 A1

**Description**

TECHNICAL FIELD

The present invention relates to particles for display media having charging properties used for an information display panel, particularly relates to particles for display media in which an external additive is applied on a surface of a mother particle made of resin.

RELATED ART

Heretofore, as the particles for display media used for an information display panel, in which the particles for display media having charging properties are sealed between two substrates, at least one substrate being transparent, and, in which the particles for display media are made to move so as to display information image by applying a voltage between opposed pixel electrodes pair which is formed oppositely arranged conducting layers respectively arranged to the substrates, it is known that use is made of the particles for display media, in which hydrophobic silica fine particles subjected to a hexamethyldisilazane treatment adhere to a surface of the mother particle made of resin (For example, refer to Patent Document 1: Japanese Patent Laid-Open Publication No. 2004-29699).

SUMMARY OF THE INVENTION

TASKS TO BE SOLVED BY THE INVENTION

In the information display panel using the particles for display media according to the invention, as an example, two colors of the particles for display media having different charging properties such as positive and negative are sealed and used in a cell between the substrates. Various forces such as cohesive force between particles, adhering force of particles with respect to the substrate, and so on are applied to the particles for display media. In order to make a drive possible by moving the particles for display media, it is necessary to satisfy a condition such that the driving force is larger than the particles cohesive force and the particle adhering force. Since the driving force is proportional to a voltage to be applied, it is necessary to use a high voltage for driving in the case such that the cohesive force and the adhering force are strong, and thus a design of a driving circuit used for the information display panel becomes a high voltage specification. Generally, parts of a driver for driving voltage used for a display design become expensive if the specification voltage is high. Therefore, a design of the particles for display media which can be driven under a low voltage driving is a significant technique.

An object of the invention is to eliminate the drawbacks mentioned above and to provide particles for display media which can drive under a low voltage driving, and thus reduce a cost of the information display panel using such particles for display media.

MEANS FOR SOLVING THE TASK

According to the invention, particles for display media having charging properties used for information display panel, is **characterized in that**, in the particles for display media in which an external additive is applied on a surface of a mother particle made of resin, the external additive made of an external additive of an weak hydrophobic property and an external additive made of a metal oxide is used.

As a preferred embodiment of the particles for display media according to the invention, there are cases: such that the particles for display media are constituted by negatively charging particles for display media and positively charging particles for display media, and either or both of the negatively charging particles for display media and positively charging particles for display media uses the external additive; such that the external additive of weak hydrophobic property is an external additive having a surface hydrophobic rate of external additive of 25% - 40% on an average of the positively and negatively charging external additives, measured by a methanol wettability test in which the external additive is immersed into methanol aqueous solutions having different methanol contents and shaken, and then a methanol content at which the external additive is firstly dispersed is determined as the surface hydrophobic rate of the external additive; such that, as the external additive having a surface hydrophobic rate of external additive of 25% - 40%, use is made of silica fine particle whose surface is treated by dichlorodimethylsilane; such that, as the metal oxide, use is made of $TiO_2$ or $Al_2O_3$ having a low volume resistivity; and such that the information display panel is an information display pane , in which the particles for display media having charging properties are sealed between two substrates, at least one substrate being transparent, and, in which the particles for display media are made to move so as to display information image by applying a voltage between opposed pixel electrodes pair which is formed oppositely arranged conducting layers respectively arranged to the substrates.

EFFECT OF THE INVENTION

According to the invention, since, in the particles for display media in which an external additive is applied on a surface of a mother particle made of resin, the external additive made of an external additive of an weak hydrophobic property and an external additive made of a metal oxide is used, it is possible to obtain particles for display media which can drive under a low voltage driving, and thus reduce a cost of the information display panel using such particles for display media.

BRIEF DESCRIPTION OF THE DRAWINGS

[Fig. 1] Figs. 1a and 1b are schematic views respectively explaining one embodiment of the information display panel using the particles for display media according to the invention.
[Fig. 2] Figs. 2a and 2b are schematic views respectively explaining another embodiment of the information display panel using the particles for display media according to the invention.
[Fig. 3] Fig. 3 is a schematic view explaining one embodiment of a method of manufacturing a mother particle constituting the particles for display media according to the invention.
[Fig. 4] Fig. 4 is a schematic view explaining one embodiment of the particles for display media according to the invention.

DESCRIPTION OF THE PREFERRED EMBODIMENTS

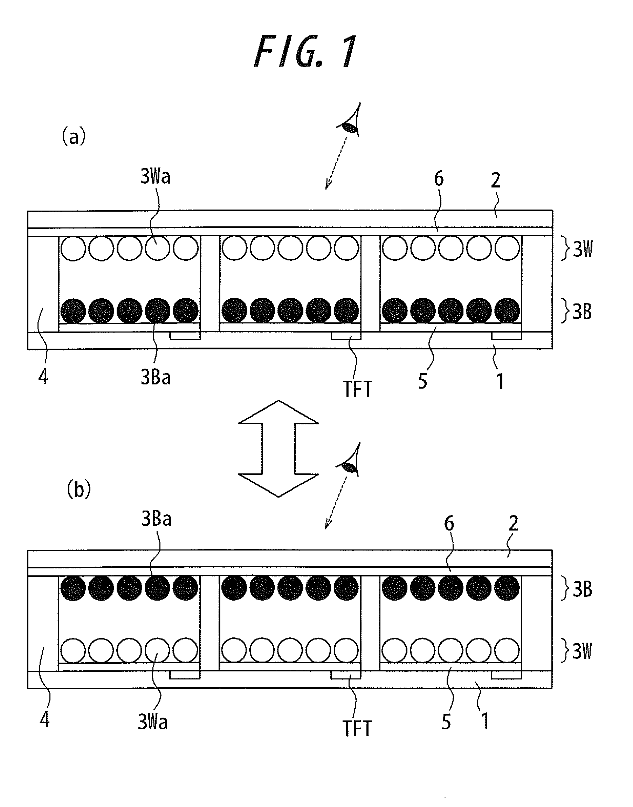

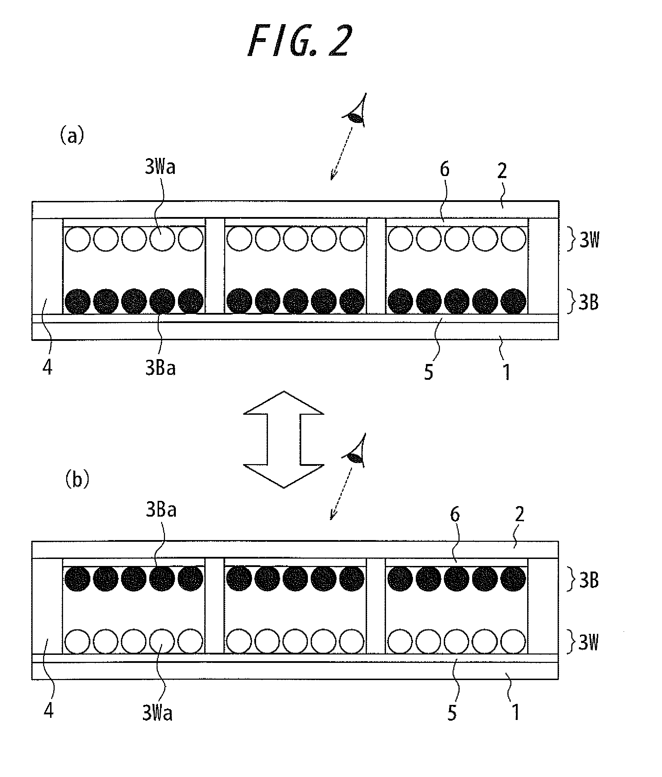

At first, a basic construction of an information display panel according to the present invention will be explained. In the information display panel used in the present invention, an electrostatic field is applied to display media sealed in the space between two opposed substrates. Along a direction of the applied electrostatic field by means of the force of the electrostatic field, Coulomb's force or the like, the charged display media are attracted and moved by varying a direction of electrostatic field. Accordingly, information such as an image or the like can be displayed. Therefore, it is necessary to design the information display panel in such a manner that the display media can move evenly and maintain stability during a reciprocal operation or during a reserving state. Here, as to forces applied to the particles constituting display media, there are an attraction force between the particles due to Coulomb' force, an imaging force with respect to the electrodes or substrates, an intermolecular force, a liquid bonding force, a gravity and the like.
Examples of the information display panel using the particles for display media according to the invention will be explained with reference to Figs. 1a and 1b and Figs. 2a and 2b.
In the examples shown in Figs. 1a and 1b, at least two or more groups of display media having different optical reflectance and different charging properties and consisting of particles having at least different optical reflectance and different charging properties (here, white color display media 3W made of the particles including negatively charging white color display particle 3Wa and black color display media 3B made of the particles including positively charging black color display particle 3Ba are shown) are moved in a perpendicular direction with respect to substrates 1 and 2, in accordance with an electric field generated by applying a voltage between a pair of pixel electrodes constituted by opposing an electrode 5 (pixel electrode having TFT) arranged to the substrate 1 and an electrode 6 arranged to the substrate 2. Then, a white color is displayed by viewing the black color display media 3B to an observer as shown in Fig. 1a, or, a black color is displayed by viewing the black color display media 3B to an observer as shown in Fig. 1b, so that a matrix display is performed by white and black dots. Moreover, in Figs. 1a and 1b, the partition walls arranged at the near side are omitted.
In the examples shown in Figs. 2a and 2b, at least two or more groups of display media having different optical reflectance and different charging properties and consisting of particles having at least different optical reflectance and different charging properties (here, white color display media 3W made of the particles including negatively charging white color display particle 3Wa and black color display media 3B made of the particles including positively charging black color display particle 3Ba are shown) are moved in a perpendicular direction with respect to substrates 1 and 2, in accordance with an electric field generated by applying a voltage between a pair of pixel electrodes constituted by opposing a line electrode 5 arranged to the substrate 1 and a line electrode 6 arranged to the substrate 2. Then, a white color is displayed by viewing the black color display media 3B to an observer as shown in Fig. 2a, or, a black color is displayed by viewing the black color display media 3B to an observer as shown in Fig. 2b, so that a matrix display is performed by white and black dots. Moreover, in Figs. 2a and 2b, the partition walls arranged at the near side are omitted.
The feature of the particles for display media according to the invention is that, in the particles for display media in which an external additive is applied on a surface of a mother particle made of resin, the external additive made of an external additive of an weak hydrophobic property and an external additive made of a metal oxide is used, Here, it is preferable that the external additive of weak hydrophobic property is an external additive having a surface hydrophobic rate of external additive of 25% - 40% on an average of the positively and negatively charging external additives, measured by a methanol wettability test in which the external additive is immersed into methanol aqueous solutions having different methanol contents and shaken, and then a methanol content at which the external additive is firstly dispersed is determined as the surface hydrophobic rate of the external additive. In this case, the reason that the surface hydrophobic rate of the external additive measured by a methanol wettability test is preferably set to 25% - 40% is as follows. If it is less than 25%, there is sometimes a case that a charging amount is not maintained, and if it exceeds 40%, there is sometimes a case that a cohesive force between the particles becomes strong and a display performance is deteriorated.

In the present invention, the feature of the particles for display media mentioned above is obtained by investigations of the inventors as mentioned below. At first, as a significant particle design to drive the particles for display media in a display under a low voltage, we found the following indications such that (1) a charging amount of the particles for display media is decreased and (2) a charging distribution on a surface of the particles for display media is even. In order to found a specific method for such indications, we investigate a design for the external additive used generally for improving a fluidity of the particles for display media. With respect to the design indication (1), the particles for display media are made to be a low charging property by using a metal oxide having a low voltage resistivity such as $TiO_2$ or $Al_2O_3$ as compared with the normal design in which use is only $SiO_2$ external additive subjected to a surface hydrophobic treatment. In addition, with respect to the design indication (2), a diffuseness of electrified charge is applied by weakening a surface hydrophobic treatment of $SiO_2$ external additive. By performing the improvements of the designs of the external additive as mentioned above, the display which can drive under a low voltage by weakening a cohesive force of the particles for display media is manufactured.

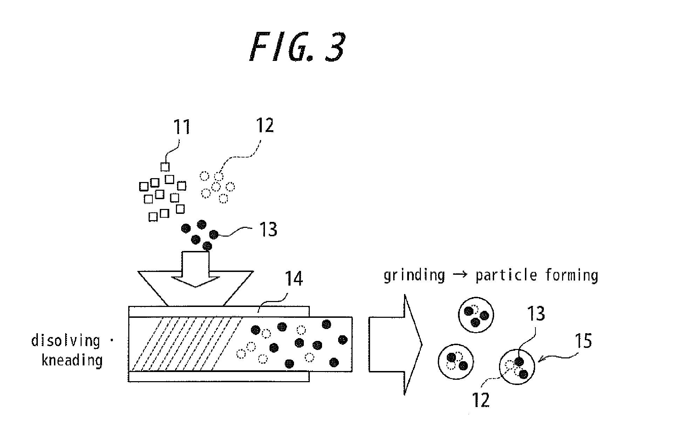

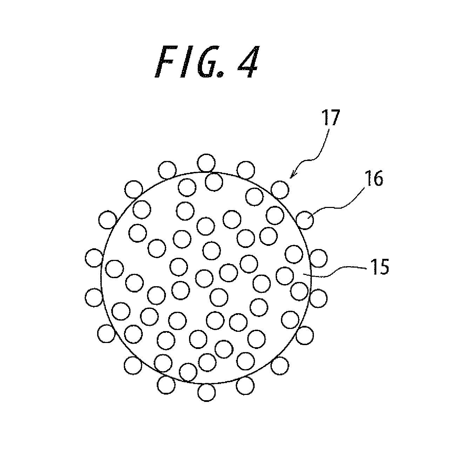

Fig. 3 is a schematic view explaining one embodiment of a method of manufacturing a mother particle constituting the particles for display media according to the invention. In the embodiment shown in Fig. 3, at first, resin material 11, coloring agent 12 such as pigment and charge control agents 13 are dissolved and kneaded by for example a roll mill 14. Then, the thus dissolved and kneaded mixtures are ground and classified to form a mother particle 14. Then, as show in Fig. 4, an external additive 16 is applied on a surface of the thus manufactured mother particle 15 to form a particle for display media 17 according to the invention.

In the present invention, a surface hydrophobic rate of external additive according to a methanol wettability test is preferably measured in such a manner that the external additive is immersed into methanol aqueous solutions having different methanol contents and shaken, and then a methanol content at which the external additive is firstly dispersed is determined as the surface hydrophobic rate of the external additive. Moreover, as the external additive having a surface hydrophobic rate of external additive of 25% - 40%, it is preferable to use a silica fine particle whose surface is treated by hexamethyldisilazane. Further, it is preferable that a mixture rate of the external additive having a low hydrophobic property with respect to the external additive made of a metal oxide is in a range of 25% - 40%.

Hereinafter, respective members constituting the information display panel using the particles for display media according to the invention will be explained.

As the substrate, at least one of the substrates is the transparent substrate through which a color of the display media can be observed from outside of the panel, and it is preferred to use a material having a high transmission factor of visible light and an excellent heat resistance. The other substrate may be transparent or may be opaque. Examples of the substrate material include polymer sheets such as polyethylene terephthalate (PET), polyethylene naphthalate (PEN), polyethylene (PE), polycarbonate (PC), polyimide (PI), polyether sulfone (PES) or acryl and a glass sheet, a quartz sheet or a metal sheet coated with insulation film. A transparent material among them is used to an observation side. The thickness of the substrate is preferably 2 to 2000 $\mu$m, more preferably 5 to 1000 $\mu$m. When the thickness is too thin, it becomes difficult to maintain strength and distance uniformity between the substrates, and when the thickness is thicker than 2000 $\mu$m, there is a drawback as a thin-type information display panel.

As a material of the electrode arranged to the substrate, use is made of metals such as aluminum, silver, nickel, copper, gold, or, conductive metal oxides such as indium tin oxide (ITO), zinc-doped indium oxide (IZO), aluminum-doped zinc oxide (AZO), indium oxide, conductive tin oxide, antimony tin oxide (ATO), conductive zinc oxide and so on, or, conductive polymers such as polyaniline, polypyrrole, polythiophene and so on, and they are used by being suitably selected. As an electrode forming method, use is made of a method in which the materials mentioned above are made to a thin film to perform pattering by means of sputtering method, vacuum vapor deposition method, CVD (chemical vapor deposition) method, coating method and so on, or, a method in which conductive materials and solvents are mixed with synthetic resin binder and the mixture is sprayed to perform pattering. A transparency is necessary for the electrode arranged to the substrate at an observation side (display surface side), but it is not necessary for the electrode arranged to the substrate at a rear side. In both cases, the materials mentioned above, which are conductive and have a pattern formation capability, can be suitably used. Additionally, the thickness of the electrode may be suitable unless the electroconductivity is absent or any hindrance exists in optical transparency, and it is preferable to be 0.01 to 10 $\mu$m, more preferable to be 0.05 to 5 $\mu$m. The material and the thickness of the electrode arranged to the rear substrate are the same as those of the electrode arranged to the substrate at the display side, but transparency is not necessary,

As the partition wall arranged to the substrate according to need, a shape of the partition wall is suitably designed in accordance with a kind of the display media used for the display and is not restricted. However, it is preferred to set a width of the partition wall to 2 - 100 μm more preferably 3 - 50 μm and to set a height of the partition wall to 10 - 500 μm more preferably 10 - 200 μm. A height of the partition wall arranged for dividing a space between the substrates into a cell may be the same as or lower than that of a gap between the substrates.

Moreover, as a method of forming the partition wall, use may be made of a double rib method wherein ribs are formed on the opposed substrates 1, 2 respectively and they are connected with each other and a single rib method wherein a rib is formed on one of the opposed substrates only. The present invention may be preferably applied to both methods mentioned above.

The cell formed by the partition walls each made of rib has a square shape, a triangular shape, a line shape, a circular shape and a hexagon shape, and has an arrangement such as a grid, a honeycomb and a mesh, 5 viewed from a plane surface of the substrate. It is preferred that the portion corresponding to a cross section of the partition wall observed from the display side (an area of the frame portion of the cell) should be made as small as possible. In this case, a clearness of the image display can be improved.

The formation method of the partition wall is not particularly restricted, however, a die transfer method, a screen-printing method, a sandblast method, a photolithography method and an additive method may be preferably used for the information display panel according to the invention. Among them, it is preferred to use a photolithography method using a resist film or a die transfer method.

Then, the particles having charging property used for the particles for display media according to the invention will be explained. The particles having charging property are used as the display media as they are, or, used as the display media after they are mixed with the other particles.

The particle may be composed of resins as a main ingredient, and can include according to need charge control agents, coloring agent, inorganic additives and so on, as is the same as the know one. Hereinafter, typical examples of resin, charge control agent, coloring agent, additive and so on will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye having various colors as will be described below are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I.

pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent. The particles having a desired color can be produced by mixing the coloring agents mentioned above.

Moreover, as the average particle diameter d (0.5) of the particles having charging property (hereinafter, called sometimes as particles), it is preferred to set d (0.5) to 1 - 20 $\mu$m and to use even particles. If the average particle diameter d (0.5) exceeds this range, the image clearness sometimes deteriorated, and, if the average particle diameter is smaller than this range, an agglutination force between the particles becomes larger and the movement of the particles is prevented.

Further, it is preferred that particle diameter distribution Span of the particles, which is defined by the following formula, is less than 5 preferably less than 3:

$$\text{Span} = (d(0.9) - d(0.1))/d(0.5) \; ;$$

(here, d (0.5) means a value of the particle diameter expressed by $\mu$m wherein an amount of the particles having the particle diameter larger than or smaller than this value is 50%, d (0.1) means a value of the particle diameter expressed by $\mu$m wherein an amount of the particles having the particle diameter smaller than this value is 10%, and d (0.9) means a value of the particle diameter expressed by $\mu$m wherein an amount of the particles having the particle diameter smaller than this value is 90%).

If the particle diameter distribution Span of the particles is set to not more than 5, the particle diameter becomes even and it is possible to perform an even particle movement,

Furthermore, in the case of using a plurality of display media, it is preferred to set a ratio of d (0.5) of the particles having smallest diameter with respect to d (0.5) of the particles having largest diameter to not more than 10 preferably not more than 10, The particles having different charge characteristics with each other are moved reversely, even if the particle diameter distribution Span is made smaller. Therefore, it is preferred that the particle sizes of the particles are made to be even with each other, and same amounts of the particles are easily moved in a reverse direction, and thus that is this range.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

Further, in the dry-type information display panel in which the display media constituted by the particles having charging property are driven in a gas space, it is important to control a gas in a gap surrounding the display media between the substrates, and a suitable gas control contributes an improvement of display stability. Specifically, it is important to control a humidity of the gap gas to not more than 60% RH at 25°C, preferably not more than 50% RH. The above gap means a gas portion surrounding the display media obtained by substituting the electrodes 5, 6 (in the case of arranging electrode inside of substrate), an occupied portion of the display media, an occupied portion of the partition walls 4 and a seal portion of the device from the space between the substrate 1 and the substrate 2 for example in Figs. 1 a and 1b to Figs. 2a and 2b.

A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the information display panel so as to maintain the humidity mentioned above. For example, it is important to perform the operations of filling the display media and assembling the substrate under an atmosphere having a predetermined humidity and to apply a seal member and a seal method for preventing a humidity inclusion from outside of the device.

In the information display panel using the particles for display metia according to the invention, an interval between the substrates is not restricted if the display media can be moved and a contrast can be maintained, and it is adjusted normally to 2 - 500 $\mu$m, preferably 5 -200 $\mu$m.

Moreover, in the information display panel of the charged particles moving type, an interval between the substrates is adjusted normally to 10 - 100 $\mu$m, preferably 10-50 $\mu$m. Further, it is preferred to control a volume occupied rate of the display media in a space between the opposed substrates to 5 - 70 %, more preferably 5 - 60 %. If the volume occupied rate of the display media exceeds 70 %, the display media become difficult to move, and if it is less than 5 %, a sufficient contrast cannot be obtained and a clear image display is not performed.

As the method of performing a display by moving the charged particles, there is another method in which the charged particles are sealed in a microcapsule with an insulation liquid and the microcapsule is arranged between a pair of opposed electrodes, and the present invention can be applied to a driving of such type of the information display panel.

EXAMPLES

Hereinafter, actual examples will be explained.

As mentioned below, a mother particle was manufactured by kneading and grinding method, and a predetermined external additive shown in the following Table 1 was applied on a surface of the mother particle so as to form particles for display media according to the present example and particles for display media according to the comparative example. Respective particles for display media were filled in the panel, and then an image was displayed by applying a voltage to the panel so as to estimate their performances.

(1) As to a kind of the external additives and their combinations:

The external additives and their combinations shown in the following Table 1 were used. A treatment of the external additives were performed by applying 1.6 parts by weight of SiO$_2$ external additive on 100 parts by weight of preliminary formed mother particles, and applying 1.1 parts by weight of metal oxide external additives on 100 parts by weight of mother particles. The applying of the external additives were performed by shaking a bottle in which the mother particles and the external additives were accommodated by hands so as to mix them, and agitating the mother particles and the external additives at a high speed by CD mixing apparatus so as to apply the external additives evenly on a surface of the mother particle.

[Table 1]

| negatively charging metal oxide external additive | positively charging SiO$_2$ , external additive | positively charging metal oxide external additive | methanol wettability average value of positive/ negative external additives |
|---|---|---|---|
| Japan AEROSIL: NKT90 (TiO$_2$), primary particle diameter 14nm, volume resistivity: ~10$^6$($\Omega$·cm) | Japan AEROSIL: RA200H, primary particle diameter 12nm, surface aminosilane+PDMS treatment, methanol wettability rate: 25% | Japan AEROSIL: C805 (Al$_2$O$_3$), primary particle diameter 14nm, volume resistivity: ~10$^5$($\Omega$·cm) | 25% |
| Japan AEROSIL: NKT90 (TiO$_2$), primary particle diameter 14nm, volume resistivity: ~10$^6$($\Omega$·cm) | Japan AEROSIL: RA200H, primary particle diameter 12nm, surface aminosilane+PDMS treatment, methanol wettability rate: 25% | Japan AEROSIL: C805 (Al$_2$O$_3$), primary particle diameter 14nm, volume resistivity: ~10$^5$($\Omega$·cm) | 40% |

(continued)

| negatively charging metal oxide external additive | positively charging SiO$_2$, external additive | positively charging metal oxide external additive | methanol wettability average value of positive/ negative external additives |
|---|---|---|---|
| Japan AEROSIL: NKT90 (TiO2), primary particle diameter 14nm, volume resistivity: ~10$^6$(Ω·cm) | Japan AEROSIL: RA200H, primary particle diameter 12nm, surface aminasilane+PDMS wettability treatment, methanol wettability rate: 25% | Japan AEROSIL: C805 (Al$_2$O$_3$), primary particle diameter 14nm, volume resistivity: ~10$^5$(Ω·cm) | 32.50% |
| Japan AEROSIL: NKT90 (TiO$_2$), primary particle diameter 14 nm volume resistivity: ~10$^6$(Ω·cm) | Wacker (Germany): H3005, particle diameter 8nm, surface aminosiiane+PDMS treatment, methanol wettability rate: >50% | Japan AEROSIL: C805 (Al$_2$O$_3$), primary particle diameter 14nm, volume resistivity; ~10$^5$(Ω·cm) | 40% |
| - | Japan AEROSIL: RA200H, primary partic!e diameter 12nm, surface aminosilane+PDMS treatment,methanol wettability rate: 25% | - | 25% |
| Japan AEROSIL: NKT90 (TiO$_2$), primary particle diameter 14nm, volume resistivity: ~10$^6$(Ω·cm) | Wacker (Germany): H3005, primary particle diameter 8nm, Japan surface aminosilane+PDMS treatment, methanol wettability rate: >50% | AEROSIL: C805(Al$_2$O$_3$), primary particle diameter 14nm, volume resistivity: ~10$^5$(Ω·cm) | >50% |
| - | Wacker (Germany): H3005, primary particle diameter 8nm, surface aminosilane+PDMS treatment, methanol wettability rate: >50% | - | >50% |
| Japan AEROSIL: NKT90 (TiO$_2$), primary particle diameter 14nm, volume resistivity: ~10$^6$(Ω·cm) | Japan AEROSIL: RA200H, primary particle diameter 12nm, surface aminosilane+PDMS treatment, methanol wettability rate: 25% | Japan AEROSIL: C805 (Al$_2$O$_3$), primary particle diameter 14nm, volume resistivity: : ~10$^5$(Ω·cm) | 17.50% |

(2) As to a method of estimating properties of the external additive:

With respect to the external additives, a methanol wettability test mentioned below and a volume resistivity of the external additives were measured so as to estimate properties of the external additives.

<Methanol wettability test>

The methanol wettability test was performed as follows. At first, 10g of methanol aqueous solution having different contents were respectively filled in a vial container, and 0.1g of the external additives shown in Table 1 was dropped respectively into the solutions. Then, a lid of the vial container was closed, and the container was shaken at 10 times by hand. If a content of methanol was higher, the external additive was easily dispersed in the aqueous solution.

If a surface hydrophobic rate of external additive was higher, the external additive was dispersed in the methanol wettability test using a high content of methanol. In the test, a content of methanol was gradually increased, and a methanol content at which the external additive was dispersed by 50% was determined as a specific value of the surface hydrophobic rate of external additions. In the present test, a content of methanol was increased at 5% by 5% from 0%, and a dispersion property of the external additive was estimated.

<Measurement of volume resistivity of the external additive>

By using Hiresta-UP (MCP-HT450, MCP-PD41) manufactured by Mitsubishi Chemical Corporation, 30g of the external additive was agglutinated under a pressure of 50MPa, and a resistivity was measured at an applied voltage of 1kV. In this case, a volume resistivity was calculated with reference to a thickness of the external additive and measured area of the apparatus from a calculation: volume resistivity ($\Omega{\cdot}cm$) = measured resistivity value ($\Omega$) $\times$ measured area ($cm^2$) / thickness of the external additive (cm).

(3) As to a method of manufacturing the particles for display media:

The mother particle, to which respective external additives shown in Table 1 was applied, was manufactured by: mixing base resin, white pigment or black pigment and charge control agent by a mixer; melting and kneading the mixture by a heated kneader; and grinding the agglutinated particles so as to disperse evenly other materials in the resin. A control temperature of the heated kneader was set to 200 ˚C. Then, the pellet was ground by a grinder to form a powder. After that, the mother particles having a desired diameter distribution was manufactured by classifying the powder. In the present examples and the comparative examples, negatively charging external additives were applied to the thus manufactured white mother particle and positively charging external additives were applied to the thus manufactured black mother particle as shown in Table 1, so as to form negatively charging white color particles for display media and positively charging black color particles for display media.

(4) As to panel filling:

The predetermined white color particles for display media and the predetermined black color particles for display media, which were manufactured according to the method mentioned above, were filled together in a panel space in which transparent electrodes (ITO) were deposited to form estimation panels according to the present examples and the comparative examples. In the panel used herein, a distance between the electrodes was set to 40$\mu$m, so that, by applying a voltage of 40V to the electrodes, an electric field of $1{\times}10^8$ (V/m) was applied to the particles for display media.

(5) As to panel estimation:

A voltage of 40V was applied in such a manner that a direction of voltage was changed alternately between the electrodes of the respective estimation panels according to the present examples and the comparative examples, so as to display a white color and a black color alternately on the estimation panel. Then, both in the white color display and the black color display, OD value (optical density) was measured by using an optical densitometer: RD 19 (SAKATA INX ENGINEERING). Based on the OD of white color display: WOD and the OD of black color display: BOD, a contrast $CR=10^{(BOD-WOD)}$ was calculated, and the calculated CR is an indication of the panel performance. In the case such that a driving was performed by applying a voltage of 40V to the electrodes, CR>6 is estimated as an acceptance (O) and CR$\leq$6 is estimated as a rejection (x).

(6) As to estimation:

The results of estimation were shown in the following Table 2. From the results of Table 2, it was understood that, both in the white color particles for display media and the black color particles for display media, a case (present examples), in which use was made of the external additive constituted by the external additive having a weak hydrophobic property and the external additive made of a metal oxide, can reduce the agglutination of the particles for display media as compared with a case (comparative example), in which, as the external additive for one of the white color particles for display media and the black color particles for display media, only the external additive having normal hydrophobic property was used and the external additive made of a metal oxide was not used. As a result, the information display panel using the particles for display media according to the invention shows an excellent image property. Therefore, it is understood that, when the external additive for the particles for display media is designed, it is necessary to use the external additive constituted by the external additive having a weak hydrophobic property and the external additive made of a metal oxide. In the design of the external additive for the particles for display media, we think that a low charging property of the particles for display media and a diffuseness of a charge on a surface of the particles for display media are necessary for reducing a driving voltage of the particles for display media.

[Table 2]

|  | WOD | BOD | CR | acceptance (CR>6) |
|---|---|---|---|---|
| present example 1 | 0.700 | 1.590 | 7.762 | ○ |
| present example 2 | 0.750 | 1.550 | 6.310 | ○ |
| present example 3 | 0.710 | 1.580 | 7.410 | ○ |
| present example 4 | 0.750 | 1.595 | 6.998 | ○ |
| comparative example 1 | 0.890 | 1.345 | 2.851 | × |
| comparative example 2 | 0.770 | 1.445 | 4.732 | × |
| comparative example 3 | 0.910 | 1.275 | 2.312 | x |
| comparative example 4 | 0.850 | 1.495 | 4.947 | × |

INDUSTRIAL APPLICABILITY

The information display panel using the particles for display media according to the invention is applicable to the display unit for mobile equipment such as notebook personal computers, PDA, cellular phones, handy terminal and so on; to the electric paper for electric book, electric newspaper, electric manual (instruction handbook) and so on; to the bulletin boards such as signboards, posters, blackboards and so on; to the image display unit for electric calculator, home electric application products, auto supplies and so on; to the card display unit for point card, IC card and so on; and to the display unit for electric advertisement, electric POP (Point Of Presence, Point Of Purchase advertising), electric price tag, electric shelf tag, electric musical score, RF-ID device and so on, and further to the display unit (rewritable paper) in which display rewriting is performed by connecting with the external rewriting means.

**Claims**

1.   Particles for display media having charging properties used for information display panel, **characterized in that**, in the particles for display media in which an external additive is applied on a surface of a mother particle made of resin, the external additive made of an external additive of an weak hydrophobic property and an external additive made of a metal oxide is used.

2.   The particles for display media according to claim 1, wherein the particles for display media are constituted by negatively charging particles for display media and positively charging particles for display media, and either or both of the negatively charging particles for display media and positively charging particles for display media uses the external additive.

3.   The particles for display media according to claim 1 or 2, wherein the external additive of weak hydrophobic property is an external additive having a surface hydrophobic rate of external additive of 25% - 40% on an average of the positively and negatively charging external additives, measured by a methanol wettability test in which the external additive is immersed into methanol aqueous solutions having different methanol contents and shaken, and then a methanol content at which the external additive is firstly dispersed is determined as the surface hydrophobic rate of the external additive.

4.   The particles for display media according to one of claims 1 to 3, wherein, as the metal oxide, use is made of $TiO_2$ or $Al_2O_3$ having a low volume resistivity.

5.   The particles for display media according to one of claims 1 to 4, wherein the information display panel is an information display pane , in which the particles for display media having charging properties are sealed between two substrates, at least one substrate being transparent, and, in which the particles for display media are made to move so as to display information image by applying a voltage between opposed pixel electrodes pair which is formed oppositely arranged conducting layers respectively arranged to the substrates.

# FIG. 1

(a)

(b)

# FIG. 2

(a)

(b)

# FIG. 3

grinding → particle forming

disolving · kneading

# FIG. 4

| INTERNATIONAL SEARCH REPORT | International application No. |
|---|---|
| | PCT/JP2010/003099 |

**A. CLASSIFICATION OF SUBJECT MATTER**
*G02F1/167*(2006.01)i, *G02F1/17*(2006.01)i

According to International Patent Classification (IPC) or to both national classification and IPC

**B. FIELDS SEARCHED**

Minimum documentation searched (classification system followed by classification symbols)
G02F1/167, G02F1/17

Documentation searched other than minimum documentation to the extent that such documents are included in the fields searched
Jitsuyo Shinan Koho    1922-1996    Jitsuyo Shinan Toroku Koho    1996-2010
Kokai Jitsuyo Shinan Koho    1971-2010    Toroku Jitsuyo Shinan Koho    1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-051931 A (Brother Industries, Ltd.), 06 March 2008 (06.03.2008), entire text; all drawings & US 2009/0147348 A1    & EP 2058698 A1 & WO 2008/023495 A1 | 1-5 |
| A | JP 2007-178881 A (Bridgestone Corp.), 12 July 2007 (12.07.2007), entire text; all drawings (Family: none) | 1-5 |
| A | JP 2007-187693 A (Toyo Ink Manufacturing Co., Ltd.), 26 July 2007 (26.07.2007), entire text; all drawings (Family: none) | 1-5 |

☐ Further documents are listed in the continuation of Box C.     ☐ See patent family annex.

| *   Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 June, 2010 (30.06.10) | 13 July, 2010 (13.07.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004029699 A